# EUROPÄISCHE PATENTSCHRIFT

(11) **EP 1 835 841 B1**
(45) Veröffentlichungstag und Bekanntmachung des Hinweises auf die Patenterteilung: **22.05.2013**
(21) Anmeldenummer: 05816242.1
(22) Anmeldetag: 06.12.2005
(51) Int. Cl.: A47L 15/48

(54) **GESCHIRRSPÜLMASCHINE**
DISHWASHER
LAVE-VAISSELLE

(30) Priorität: 09.12.2004 DE 102004059425; 28.01.2005 DE 102005004093
(43) Veröffentlichungstag der Anmeldung: 26.09.2007
(73) Patentinhaber: BSH Bosch und Siemens Hausgeräte GmbH, 81739 München (DE)
(72) Erfinder: JERG, Helmut, 89537 Giengen (DE); PAINTNER, Kai, 86477 Adelsried (DE)
(86) Internationale Anmeldenummer: PCT/EP2005/056514
(87) Internationale Veröffentlichungsnummer: WO 2006/061381

(56) Entgegenhaltungen:
- EP-A- 0 358 279
- DE-A1- 2 016 831
- DE-A1- 10 024 892
- FR-A- 2 491 322

## Beschreibung

Herkömmliche Geschirrspülmaschinen weisen bekanntlich ein Spülverfahren auf, dessen Programmablauf im Allgemeinen aus wenigstens einem Teilprogrammschritt "Vorspülen", einem Teilprogrammschritt "Reinigen", wenigstens einem Teilprogrammschritt "Zwischenspülen", einem Teilprogrammschritt "Klarspülen" und einem Teilprogrammschritt "Trocknen" besteht. Zur Erhöhung des Reinigungseffekts wird dabei die Spülflüssigkeit vor oder während eines Teilprogrammschrittes erwärmt. Die Erwärmung der Spülflüssigkeit erfolgt üblicherweise mittels elektrischer Heizelemente. Zur Trocknung des Spülguts in einer Geschirrspülmaschine sind unterschiedliche Trocknungssysteme bekannt.

So ist aus der DE 20 16 831 eine Geschirrspülmaschine der eingangs genannten Art bekannt, bei der die Luft aus dem Spülbehälter über eine verschließbare Öffnung in der Wand des Spülbehälters auf reversibel dehydrierbares Material geleitet wird und von dort über eine Öffnung nach außen. Die Desorption des reversibel dehydrierbaren Materials findet während der Stillstandsphase des Gerätes statt, wobei der dabei entstehende Wasserdampf über die Öffnung nach außen geleitet wird. Die beschriebene Geschirrspülmaschine ist aus energetischer Sicht nachteilig, da die Regeneration des reversibel dehydrierbaren Materials während einer Stillstandsphase des Gerätes stattfindet, somit zu einer Zeit, zu der keiner der eingangs beschriebenen Teilprogrammschritte durchgeführt wird. Ein weiterer Nachteil besteht darin, dass durch das Ausleiten des während der Regeneration des reversibel dehydrierbaren Materials entstehenden Wasserdampfes nach außen eine Schädigung der umgebenden Küchenmöbel nicht ausgeschlossen werden kann. Die Regenerierung ist dabei mit einem zusätzlichen Energiebedarf verbunden, der zusätzlich zu dem während der Teilprogrammschritte benötigten Energiebedarf anfällt.

Um den Energieaufwand beim Betreiben einer Geschirrspülmaschine so gering wie möglich zu halten, ist aus der DE 103 53 774.0 der Anmelderin eine Geschirrspülmaschine mit einem Spülbehälter und Vorrichtungen zum Spülen von Geschirr mittels Spülflotte bekannt, welche eine mit dem Spülbehälter luftleitend verbundene, reversibel dehydrierbares Material enthaltende Sorptionskolonne aufweist, wobei die Sorptionskolonne einerseits zur Trocknung des Geschirrs und andererseits die zur Desorption der Sorptionskolonne eingesetzte Wärmeenergie zur Erwärmung der im Spülbehälter befindlichen Spülflotte und/oder des Geschirrs wenigstens teilweise verwendet wird.

Zur Lösung des gleichen Problems schlägt die DE 103 53 775.9 der Anmelderin vor, zum Betreiben eines Gerätes in dem wenigstens einem Teilprogrammschritt "Trocknen" Luft aus einem Behandlungsraum und/oder aus Umgebungsluft durch eine Sorptionskolonne und in den Behandlungsraum zu leiten, wobei die Sorptionskolonne reversibel dehydrierbares Material enthält und der Luft während des Durchleitens Feuchtigkeit entzieht.

Durch den Einsatz von reversibel dehydrierbarem Material mit hygroskopischer Eigenschaft, z.B. Zeolith, ist eine Erwärmung des zu behandelnden Gutes in dem dem Teilprogrammschritt "Trocknen" vorhergehenden Teilprogrammschritts normalerweise nicht mehr notwendig. Hierdurch wird eine beträchtliche Energieeinsparung möglich.

Aus der EP 0 358 279 B1 ist eine Geschirrspülmaschine mit einem geschlossenen Trockensystem bekannt, bei dem die Luft aus dem Spülbehälter über eine durch Aufheizung regenerierbare Trockenvorrichtung und von dieser zurück in den Spülbehälter zirkuliert. Die Trockenvorrichtung ist dem außerhalb des Spülbehälters angeordneten Erhitzer für die Spülflotte, vorzugsweise ein Durchlauferhitzer, zugeordnet. Der Auslass des Spülbehälters befindet sich in der Decke des Spülbehälters, während der Einlass in die Spülwanne des Spülbehälters integriert ist. Der Auslass des Spülbehälters ist über einen Luftkanal mit der Sorptionstrockenvorrichtung verbunden. Nachdem die Sorptionstrockenvorrichtung dem Erhitzer für die Spülflotte zugeordnet ist, ist diese in einem Bereich unterhalb der Spülwanne angeordnet.

Allen oben beschriebenen Anordnungen ist gemeinsam, dass die Einbindung der Sorptionstrockenvorrichtung in eine Geschirrspülmaschine lediglich konzeptionell beschrieben ist.

Die Geschirrspülmaschine der DE 100 24 892 A1 umfasst ein Trocknungsgebläse, durch das während der Trocknungsphase eines Spülprogramms feuchte Luft aus ihrem Spülbehälter abtransportierbar ist, und eine Speichereinrichtung, welche in Strömungsrichtung der transportierten Luft dem Trocknungsgebläse nachgeschaltet ist und durch welche aus der transportierten Luft Feuchtigkeit aufnehmbar ist. Die Speichereinrichtung kann dazu ein Absorptionsmedium umfassen.

Bei der Geschirrspülmaschine der FR 2 491 322 A ist zum Trocknen von Geschirr mittels umgewälzter Luft ein Leitungssystem vorgesehen, das sich mit seinem eine spülbehälterseitige Eintrittsöffnung aufweisenden einen Abschnitt sowie seinem eine Austrittsöffnung für Luft enthaltenden anderen Abschnitt zwischen einer Seitenwand des Spülbehälters der Geschirrspülmaschine sowie einer mit geringem Abstand zu dieser verlaufenden Maschinenverkleidung und andererseits mit seinem ein Gebläse und ein Heizregister aufweisenden Mittelabschnitt im Freiraum unterhalb des Behälterbodens erstreckt.

Die Aufgabe der vorliegenden Erfindung ist es, eine Geschirrspülmaschine bereitzustellen, in welche sich eine Sorptionstrockenvorrichtung auf einfache und kostengünstige Weise integrieren lässt, und mit welcher das in ihrem Spülbehälter befindliche Spülgut effizient zu reinigen und zu trocknen ist, wobei der damit verbundene Energieaufwand gering gehalten werden kann.

Diese Aufgabe wird mit einer Geschirrspülmaschine mit den Merkmalen gemäß Anspruch 1 gelöst. Vorteilhafte Weiterbildungen der vorliegenden Erfindung sind in den Unteransprüchen angegeben.

Eine erfindungsgemäße Geschirrspülmaschine, insbesondere eine Haushalts-Geschirrspülmaschine, weist einen Spülbehälter und Vorrichtungen zum Spülen von Geschirr mittels Spülflotte sowie eine Sorptionstrockenvorrichtung auf, die mit dem Spülbehälter luftleitend über einen Auslass des Spülbehälters und einen Einlass des Spülbehälters verbunden ist und eine Sorptionskolonne mit reversibel dehydrierbarem Material aufweist. Die Sorptionstrockenvorrichtung ist dabei zwischen einer Spülbehälterwand und einer äußeren Gehäusewand der Geschirrspülmaschine angeordnet.

Erfingdungsgemäß wird die Sorptionskolonne einerseits zur Trocknung des Geschirrs und andererseits die zur Desorption der Sorptionskolonne eingesetzte Wärmeenergie zur Erwärmung der im Spülbehälter befindlichen Spülflotte und/oder des Spülguts verwendet.

Mit der vorliegenden Erfindung ist eine Geschirrspülmaschine bereitgestellt, welche unter wirtschaftlichen Gesichtspunkten herstellbar ist und mit der das im Spülbehälter befindliche Spülgut effizient zu reinigen und zu trocknen ist, wobei der damit verbundene Energieaufwand gering gehalten werden kann. Die Geschirrspülmaschine kann vom Funktions-Prinzip her, wie in der DE 103 53 774.0 und/oder der DE 103 53 775.0 der Anmelderin beschrieben, ausgebildet sein, deren Inhalte in diese Anmeldung, soweit sinnvoll, aufgenommen werden. Die hier beschriebene Maschine unterscheidet sich durch eine bevorzugte Anordnung der Sorptionstrockenvorrichtung.

Nach einem bevorzugten Merkmal wird Luft aus dem Spülbehälter und/oder aus der Umgebungsluft während eines Teilprogrammschritts mit zu erwärmender Spülflotte, bevorzugt während des Teilprogrammschritts "Reinigen" und/oder "Vorspülen" und/oder "Klarspülen" durch die Sorptionskolonne und in den Spülbehälter geleitet. Zweckmäßigerweise ist zur Desorption des reversibel dehydrierbaren Materials und der Erwärmung der Spülflotte und/oder des Spülguts ein elektrisches Heizelement angeordnet.

In einer zweckmäßigen Ausgestaltung sind die Sorptionskolonne, und optional das elektrische Heizelement, konzentrisch um den Auslass und/oder den Einlass angeordnet. Durch die konzentrische Bauweise ergibt sich eine besonders geringe Bauhöhe und damit eine besondere raumeffektive Gestaltung der Sorptionstrockenvorrichtung. Im übrigen braucht die Anordnung der unterhalb der Spülwanne angeordneten Funktionselemente gegenüber herkömmlichen Geschirrspülmaschinen nicht geändert zu werden. Der Auslass befindet sich in einer Seitenwand. Der Einlass oder auch mehrere Einlässe können in derselben Spülbehälterwand, in der Spülwanne oder in der Spülbehälterdecke angeordnet sein. Die zuerst genannte Variante bietet hierbei den Vorteil einer besonders einfachen konstruktiven Ausgestaltung, da auf den Einbau von Luftkanälen weitestgehend verzichtet werden kann. Andererseits bietet das Vorsehen von Luftkanälen den eingangs erwähnten Vorteil der Ausbildung einer Kondensationsfläche, so dass die Sorptionskolonne der Sorptionstrockenvorrichtung insgesamt kleiner ausgeführt werden kann.

Das elektrische Heizelement ist bevorzugt in dem reversibel dehydrierbaren Material oder in einer Leitung zur Sorptionskolonne angeordnet.

Gemäß einer weiteren zweckmäßigen Ausgestaltung ist vorgesehen, den Auslass und/oder den Einlass mit einem passiven Verschlussmittel gegen eindringendes Wasser zu versehen. Dies kann im einfachsten Fall eine Abdeckung über dem Aus- bzw. Einlass sein, welche vorzugsweise derart ausgebildet ist, dass gleichzeitig die Strömungsrichtung des Luftstroms festgelegt wird, um eine möglichst gute Verwirbelung der Luft im Spülbehälter zu erzielen, so dass eine gute Feuchtigkeitsaufnahme realisiert ist.

In einer alternativen Ausgestaltung kann vorgesehen sein, den Auslass und/oder den Einlass mit einem aktiven Verschlussmittel zu versehen. Das Verschlussmittel kann beispielsweise durch Anlegen einer Spannung betätigbar ausgebildet sein. Das Verschlussmittel kann motorisch oder hydraulisch ausgebildet sein. Besonders bevorzugt ist es dabei, wenn mit dem Anlegen einer Spannung an ein Gebläse der Sorptionstrockenvorrichtung Spannung an das Verschlussmittel angelegt ist, so dass sich die Verschlussmittel öffnen, um dadurch einen Luftkreislauf zur Sorptionstrockenvorrichtung zu schaffen. Der Ein- und Auslass müssen dabei nur während der Regenerationsphase der Sorptionskolonne und während des Teilprogrammschritts "Trocknen" geöffnet sein. Während der übrigen Teilprogrammschritte sorgen die Verschlussmittel für eine sichere Abdichtung, um das Eindringen von Spritzwasser in die elektrische Funktionselemente aufweisende Sorptionstrockenvorrichtung zu verhindern.

In einer weiteren zweckmäßigen Ausgestaltung kann das Verschlussmittel auch durch ein temperaturempfindliches Memory-Metall betätigt werden. Die Ansteuerung des Verschlussmittels erfolgt hierbei nicht auf elektrische Weise, sondern wird aufgrund der während unterschiedlicher Teilprogrammschritte vorherrschenden Temperaturen bewirkt.

Die Erfindung wird nachfolgend anhand einer Figur näher erläutert, in der ein Ausführungsbeispiel einer erfindungsgemäßen Geschirrspülmaschine dargestellt ist.

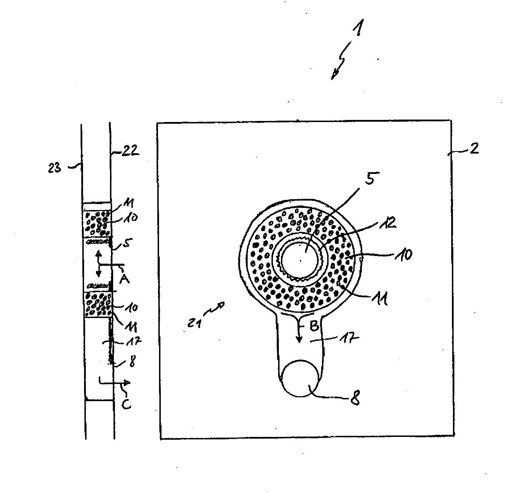

Die Figur zeigt in schematischer Darstellungsweise eine erfindungsgemäße Geschirrspülmaschine 1 mit einem Spülbehälter 2, in dem nicht dargestellte Geschirrkörbe zur Einordnung von ebenfalls nicht dargestelltem Spülgut angeordnet sind. Die Geschirrspülmaschine 1 weist eine mit dem Spülbehälter 2 luftleitend verbundene, reversibel dehydrierbares Material 11 enthaltende Sorptionskolonne 10 auf, wobei die Sorptionskolonne 10 einerseits zur Trocknung als auch andererseits zur Erwärmung durchgeleiteter Luft verwendet wird. Der Spülbehälter 2 weist einen im beschriebenen Ausführungsbeispiel in einem mittigen Bereich angeordneten Auslass 5 und einen im beschriebenen Ausführungsbeispiel nahe einer Spülwanne 6 angeordneten Einlass 8, der über eine als Luftkanal 17 ausgebildete Leitung mit der Sorptionskolonne 10 verbunden ist, auf. Neben der Sorptionskolonne 10 weist eine Sorptionstrockenvorrichtung 21 ein Gebläse (nicht dargestellt) sowie ein Heizelement 12 auf. Der Luftweg durch die Sorptionstrockenvorrichtung 21 ist durch die Pfeile A, B und C dargestellt.

Die Sorptionstrockenvorrichtung 21 ist zwischen einer Spülbehälterwand 22 und einer äußeren Gehäusewand 23 angeordnet, wobei das elektrische Heizelement 12 und die Sorptionskolonne 10 konzentrisch um den Auslass 5 angeordnet sind. Hierdurch ergibt sich eine besonders raumsparende Anordnung, da kein zusätzlicher Platz unterhalb der Spülwanne beansprucht wird, in welchem üblicherweise sämtliche Funktionskomponenten einer Geschirrspülmaschine angeordnet sind. Der Auslass 5 befindet sich im vorliegenden Ausführungsbeispiel in der Mitte der Spülbehälterwand 22. Lediglich beispielhaft ist ein einziger Einlass 8 dargestellt, welcher sich unterhalb der Sorptionstrockenvorrichtung 21 im unteren Bereich der Spülbehälterwand 22 befindet und über einen Luftkanal 17 mit dieser verbunden ist.

Gemäß einer anderen Ausgestaltung könnte eine Vielzahl an Einlässen 8 vorgesehen sein, welche z.B. konzentrisch um den Auslass 5 angeordnet sind.

In einer weiteren Variante könnte der Einlass 8 auch in der Spülwanne oder der Spülbehälterdecke angeordnet sein.

Entgegen der bisherigen Beschreibung könnte der in der Figur mit dem Bezugszeichen 5 gekennzeichnete Auslass auch einen Einlass der Sorptionstrockenvorrichtung 21 darstellen, wobei dann der in der Figur mit dem Bezugszeichen 8 gekennzeichnete Einlass den Auslass der Sorptionstrockenvorrichtung 21 darstellen würde. Hierdurch wäre der Auslass des Spülbehälters 2 über den Luftkanal 17 mit der Sorptionskolonne 10 verbunden. Der Luftkanal 17 könnte dabei als Kondensationsfläche ausgebildet werden, wodurch die in der feuchten Luft enthaltene Feuchtigkeit verringert würde, wodurch die Sorptionskolonne 10 kleiner dimensionierbar ist.

Das in der Figur nicht dargestellte Gebläse könnte als Axialgebläse im Bereich des Auslasses 5 ausgebildet sein, wobei bei dieser Variante auf einen ausreichenden Schutz gegen eindringendes Spritzwasser Rechnung zu tragen ist. Hierbei bietet sich insbesondere das Vorsehen eines aktiven Verschlussmittels, wie oben beschrieben, an. Denkbar wäre jedoch auch, das Gebläse als Radialgebläse in dem Luftkanal 17 anzuordnen.

Um ein Eindringen von Spritzwasser während eines Teilprogrammschritts, mit welchem in dem Spülbehälter befindliches Spülgut beaufschlagt wird, in den Auslass 5 sowie den Einlass 8 und damit in die elektrischen Funktionsteile (Gebläse, Heizelement 12) der Sorptionstrockenvorrichtung 21 zu verhindern, weist der Auslass 5 ein Verschlussmittel auf, welches im einfachsten Fall als passives Verschlussmittel in Form einer Abdeckung, z.B. mit Strömungsfunktion, ausgebildet sein kann (nicht dargestellt). In entsprechender Weise weist der Einlass 8 ein Verschlussmittel 15 auf, welches z.B. als Abdeckung mit Strömungsfunktion ausgebildet sein kann.

Sowohl der Auslass 5 als auch der Einlass 8 könnten gemäß einer anderen, ebenfalls nicht dargestellten Variante mit einem aktiv betätigten Verschlussmittel versehen sein, welches während des Betriebs der Sorptionstrockenvorrichtung 21 geöffnet und in den übrigen Teilprogrammschritten geschlossen wäre. Besonders vorteilhaft ist dabei eine direkte Kopplung an den Betrieb des Gebläses und/oder des elektrischen Heizelements 12. So könnte das aktive Verschlussmittel motorisch und/oder hydraulisch betätigt werden, wobei die Betätigung in Abhängigkeit vom Betrieb der Sorptionstrockenvorrichtung erfolgt. Alternativ wäre auch der Einsatz eines Memory-Metalls denkbar, welcher aufgrund der sich ändernden Temperaturen während unterschiedlicher Teilprogrammschritte in eine Offnungs- oder Schließstellung gebracht werden könnte.

Mit der vorliegenden Erfindung ist eine Geschirrspülmaschine bereitgestellt, welche unter wirtschaftlichen Gesichtspunkten herstellbar ist und mit der das im Spülbehälter befindliche Spülgut effizient zu reinigen und zu trocknen ist, wobei der damit verbundene Energieaufwand gering gehalten werden kann.

### Bezugszeichenliste

| | |
|---|---|
| 1 | Geschirrspülmaschine |
| 2 | Spülbehälter |
| 5 | Auslass |
| 6 | Spülwanne |
| 8 | Einlass |
| 10 | Sorptionskolonne |
| 11 | reversibel dehydrierbares Material |
| 12 | elektrisches Heizelement |
| 17 | Luftkanal |
| 21 | Sorptionstrockenvorrichtung |
| 22 | Spülbehälterwand |
| 23 | Gehäusewand |
| A, B, C | Luftweg |

## Patentansprüche

1. Geschirrspülmaschine (1) mit einem Spülbehälter (2) und Vorrichtungen zum Spülen von Geschirr mittels Spülflotte sowie mit einer Sorptionstrockenvorrichtung (21), die mit dem Spülbehälter (2) luftleitend über einen Auslass (5) des Spülbehälters und einen Einlass (8) des Spülbehälters verbunden ist und die eine Sorptionskolonne (10) mit reversibel dehydrierbarem Material (11) aufweist, wobei die Sorptionstrockenvorrichtung (21) zwischen einer Spülbehälterwand (22) und einer äußeren Gehäusewand (23) der Geschirrspülmaschine (1) angeordnet ist, und wobei die Sorptionskolonne einerseits zur Trocknung des Geschirrs und andererseits die zur Desorption der Sorptionskolonne eingesetzte Wärmeenergie zur Erwärmung der im Spülbehälter (2) befindlichen Spülflotte und/oder des Spülguts verwendet wird.

2. Geschirrspülmaschine nach Anspruch 1, **dadurch gekennzeichnet, dass** Luft aus dem Spülbehälter und/oder Umgebungsluft während eines Teilprogrammschritts mit zu erwärmender Spülflotte, bevorzugt während des Teilprogrammschritts "Reinigen" und/oder "Vorspülen" und/oder "Klarspülen", durch die Sorptionskolonne und in den Spülbehälter leitbar ist.

3. Geschirrspülmaschine nach einem der Ansprüche 1 oder 2, **dadurch gekennzeichnet, dass** zur Desorption des reversibel dehydrierbaren Materials (11) und der Erwärmung der Spülflotte und/oder des Spülguts ein elektrisches Heizelement (12) angeordnet ist.

4. Geschirrspülmaschine nach Anspruch 3, **dadurch gekennzeichnet, dass** die Sorptionskolonne (10), und optional das elektrische Heizelement (12), konzentrisch um den Auslass (5) und/oder den Einlass (8) angeordnet sind.

5. Geschirrspülmaschine nach Anspruch 3 oder 4, **dadurch gekennzeichnet, dass** das Heizelement (12) in dem reversibel dehydrierbaren Material oder in einer Leitung zur Sorptionskolonne angeordnet ist.

6. Geschirrspülmaschine nach einem der Ansprüche 1 bis 5, **dadurch gekennzeichnet, dass** der Auslass (5) und/oder der Einlass (8) mit einem passiven Verschlussmittel (15) gegen eindringendes Wasser versehen sind.

7. Geschirrspülmaschine nach einem der Ansprüche 1 bis 5, **dadurch gekennzeichnet, dass** der Auslass (5) und/oder der Einlass (8) mit einem aktiven Verschlussmittel (15) versehen sind.

8. Geschirrspülmaschine nach Anspruch 7, **dadurch gekennzeichnet, dass** das Verschlussmittel (15) durch Anlegen einer Spannung betätigbar ist.

9. Geschirrspülmaschine nach Anspruch 8, **dadurch gekennzeichnet, dass** mit dem Anlegen einer Spannung an ein Gebläse (9) der Sorptionstrockenvorrichtung (21) Spannung an das Verschlussmittel (15) angelegt ist.

10. Geschirrspülmaschine nach Anspruch 9, **dadurch gekennzeichnet, dass** das Verschlussmittel (15) durch ein temperaturempfindliches Memory-Metall betätigt wird.

## Claims

1. Dishwasher (1), having a washing container (2) and apparatuses for washing dishes by means of wash liquor and having a sorption drying apparatus (21), which is connected to the washing container (2) in an air conducting manner by way of an outlet (5) of the washing container and an inlet (8) of the washing container and has a sorption column (10) containing reversibly dehydratable material (11), wherein the sorption drying apparatus (21) is disposed between a washing container wall (22) and an outer housing wall (23) of the dishwasher (1) and wherein the sorption column is used on the one hand to dry the dishes and the thermal energy used to effect the desorption of the sorption column is used on the other hand to heat the wash liquor present in the washing container (2) and/or the items being washed.

2. Dishwasher according to claim 1, **characterised in that** air from the washing container and/or ambient air can be conducted through the sorption column and into the washing container during a sub-programme step in which wash liquor has to be heated, preferably during the sub-programme step "Wash" and/or "Prewash" and/or "Final rinse".

3. Dishwasher according to one of claims 1 or 2, **characterised in that** an electric heating element (12) is disposed to effect the desorption of the reversibly dehydratable material (11) and to heat the wash liquor and/or items being washed.

4. Dishwasher according to claim 3, **characterised in that** the sorption column (10) and optionally the electric heating element (12) are disposed concentrically around the outlet (5) and/or inlet (8).

5. Dishwasher according to claim 3 or 4, **characterised in that** the heating element (12) is disposed in the reversibly dehydratable material or in a line to the sorption column.

6. Dishwasher according to one of claims 1 to 5, **characterised in that** the outlet (5) and/or inlet (8) is/are provided with a passive closing means (15) to prevent the penetration of water.

7. Dishwasher according to one of claims 1 to 5, **characterised in that** the outlet (5) and/or inlet (8) is/are provided with an active closing means (15).

8. Dishwasher according to claim 7, **characterised in that** the closing means (15) can be actuated by applying a voltage.

9. Dishwasher according to claim 8, **characterised in that** voltage is applied to the closing means (15) when a voltage is applied to a fan (9) of the sorption drying apparatus (21).

10. Dishwasher according to claim 9, **characterised in that** the closing means (15) is actuated by a temperature-sensitive memory metal.

## Revendications

1. Lave-vaisselle (1) comprenant une cuve de lavage (2) et des dispositifs pour laver la vaisselle au moyen de liquide de lavage, ainsi qu'un dispositif de séchage par sorption (21) qui est relié à la cuve de lavage (2) en conduction d'air par le biais d'une sortie (5) de la cuve de lavage et d'une entrée (8) de la cuve de lavage et qui présente une colonne de sorption (10) avec un matériau (11) pouvant être déshydraté de manière réversible, le dispositif de séchage par sorption (21) étant disposé entre une paroi de cuve de lavage (22) et un paroi de boîtier extérieure (23) du lave-vaisselle (1) et la colonne de sorption étant d'une part utilisée pour le séchage de la vaisselle et l'énergie calorifique employée pour la désorption de la colonne de sorption étant d'autre part utilisée pour chauffer le liquide de lavage et/ou les éléments à laver qui se trouvent dans la cuve de lavage (2).

2. Lave-vaisselle selon la revendication 1, **caractérisé en ce que** de l'air de la cuve de lavage et/ou de l'air ambiant peut être conduit à travers la colonne de sorption et dans la cuve de lavage pendant une étape de sous-programme avec du liquide de lavage à chauffer, de préférence pendant l'étape de sous-programme "Lavage" et/ou "Prélavage" et/ou "Rinçage".

3. Lave-vaisselle selon l'une des revendications 1 ou 2, **caractérisé en ce qu'**un élément de chauffage électrique (12) est disposé pour la désorption du matériau pouvant être déshydraté de manière réversible (11) et pour le chauffage du liquide de lavage et/ou des éléments à laver.

4. Lave-vaisselle selon la revendication 3, **caractérisé en ce que** la colonne de sorption (10) et, facultativement, l'élément de chauffage électrique (12) sont disposés de manière concentrique autour de la sortie (5) et/ou de l'entrée (8).

5. Lave-vaisselle selon la revendication 3 ou 4, **caractérisé en ce que** l'élément de chauffage (12) est disposé dans le matériau pouvant être déshydraté de manière réversible ou dans une conduite menant à la colonne de sorption.

6. Lave-vaisselle selon l'une des revendications 1 à 5, **caractérisé en ce que** la sortie (5) et/ou l'entrée (8) est/sont pourvue/s d'un moyen de fermeture passif (15) contre l'eau entrante.

7. Lave-vaisselle selon l'une des revendications 1 à 5, **caractérisé en ce que** la sortie (5) et/ou l'entrée (8) est/sont pourvue/s d'un moyen de fermeture actif (15).

8. Lave-vaisselle selon la revendication 7, **caractérisé en ce que** le moyen de fermeture (15) peut être actionné par l'application d'une tension.

9. Lave-vaisselle selon la revendication 8, **caractérisé en ce qu'**une tension est appliquée au moyen de fermeture (15) en même temps que l'application d'une tension à une soufflerie (9) du dispositif de séchage par sorption (21).

10. Lave-vaisselle selon la revendication 9, **caractérisé en ce que** le moyen de fermeture (15) est actionné par un métal à mémoire sensible à la température.
